## Europäisches Patentamt

## European Patent Office

## Office européen des brevets

(11) Numéro de publication: **0 163 566**
**B1**

(12) **FASCICULE DE BREVET EUROPÉEN**

(45) Date de publication du fascicule du brevet:
**02.11.88**

(21) Numéro de dépôt: **85400901.6**

(22) Date de dépôt: **09.05.85**

(51) Int. Cl.⁴: **F 16 D 65/56**

(54) **Frein à disque à réglage automatique.**

(30) Priorité: **23.05.84 FR 8408052**

(43) Date de publication de la demande:
**04.12.85 Bulletin 85/49**

(45) Mention de la délivrance du brevet:
**02.11.88 Bulletin 88/44**

(84) Etats contractants désignés:
**DE GB IT NL SE**

(56) Documents cité:
**EP-A-0 113 261**
**DE-A-2 724 129**
**DE-A-2 909 494**
**FR-A-1 294 718**

(73) Titulaire: **BENDIX France, 126, rue de Stalingrad,**
**F-93700 Drancy (FR)**

(72) Inventeur: **Pressaco, Pierre, 45, rue Emile Zola**
**Bâtiment C, F-93120 La Courneuve (FR)**
Inventeur: **Sauvée, Jean- Paul, 76, Boulevard Félix**
**Faure, F-93300 Aubervilliers (FR)**

(74) Mandataire: **Lejet, Christian, Division Technique**
**Service Brevets BENDIX Europe 126, rue de**
**Stalingrad, F-93700 Drancy (FR)**

LIBER, STOCKHOLM 1988

## Description

L'invention se rapporte à un frein à disque pour véhicule automobile.

L'invention concerne plus particulièrement un frein à disque du type à étrier coulissant comportant un moteur de frein susceptible d'être actionné indépendamment soit par une pression de fluide soit par une commande méchanique. L'actionnement du moteur de frein sollicite directement un premier élément de friction en engagement de friction avec une première face d'un disque tournant et par réaction au travers de l'étrier coulissant un second élément de friction en engagement de friction avec une deuxième face du disque opposée à la première face. L'étrier coulisse par rapport à un support fixe qui reçoit directement ou indirectement le couple engendré par les éléments de friction. Dans les freins de ce type, compte tenu de l'épaisseur initiale des éléments de friction, il est nécessaire d'avoir un dispositif de réglage automatique placé sur la commande mécanique de manière à ce que la course de cette commande n'évolue pas en fonction de l'usure des éléments de friction. De nombreuses solutions ont été proposées pour résoudre ce problème. Néanmoins ces systèmes présentent généralement l'inconvénient d'assurer un réglage quelque soit la cause qui ait provoqué l'actionnement de ce réglage automatique. Ce type de dispositif se met en oeuvre aussi bien pour compenser l'usure des éléments de friction, ce qui est normal, que pour compenser les déformations élastiques de l'étrier pour des pressions élevées de commande hyraulique. Ce type de dispositif impose d'avoir une course morte ne faisant pas intervenir le réglage automatique, relativement importante et de l'ordre de la déformation constatée sur l'étrier lors de son actionnement.

La demanderesse a proposé une solution à ce problème dans la EP-A-0 113 261 dans laquelle est décrit un frein à disque du type ci-dessus dans lequel le réglage automatique est neutralisé à l'aide d'un piston de contrôle annulaire lorsque la pression hydraulique agissant sur le piston de commande hydraulique atteint une valeur prédéterminée.

Tout en résolvant le problème du surréglage le dispositif décrit dans le document citée ci-dessus présente l'inconvénient d'une remise à zéro difficile du système de réglage automatique, en particulier lors du remplacement des éléments de friction. En effet, la remise à zéro peut être soit effectuée par rotation du piston de commande hydraulique avec le risque de détérioration du joint d'étanchéité 40 et du capuchon de protection 42 et ceci à condition d'avoir accès au piston soit alors par un dispositif qui mettrait en rotation l'écrou du réglage automatique mais ceci impose d'avoir ce dispositif soumis à la pression hydraulique susceptible de régner dans la chambre hydraulique du frein avec les inconvénients d'avoir à assurer une étanchéité supplémentaire sur un organe de sécurité avec tous les risques de mauvais remontage de cette étanchéité après mise en oeuvre du dispositif de remise à zéro.

L'invention à pour but de proposer un frein à disque du type décrit ci-dessus dans lequel ces inconvénients sont éliminés tout en présentant les avantages de celui-ci.

Dans ce but l'invention propose un frein à disque à réglage automatique du type comportant un étrier monté coulissant sur un support fixe au moyen d'au moins une colonnette axiale, un moteur de frein agissant directement sur un premier élément de friction et par réaction au travers de l'étrier sur un second élément de friction, ledit moteur de frein comportant une commande mécanique agissant sur un piston de commande hydraulique au travers d'un dispositif de réglage automatique, ledit dispositif de réglage étant formé par un système vis-écrou à pas réversibles susceptible d'être actionné par ledit piston hydraulique au-delà d'une course prédéterminée de ce dernier, ledit dispositif de réglage comportant une douille solidaire en rotation avec ledit écrou et coopérant avec un piston de contrôle annulaire susceptible de se déplacer de façon étanche par rapport à ladite vis et par rapport audit moteur de frein, ledit piston de contrôle immobilisant ladite douille en rotation et en translation lorsque la pression hydraulique agissant sur la piston de commande hydraulique atteint une valeur prédéterminée caractérisé en ce que ledit système vis-écrou est placé entre ladite commande mécanique et le piston de contrôle et en ce que le moteur de frein comporte un dispositif de remise manuelle à zéro susceptible d'agir sur l'écrou du système vis-écrou pour remettre à zéro le dispositif de réglage automatique.

On comprend que grâce à une telle structure, l'ensemble du dispositif de réglage automatique est situé en dehors de la chambre de pression hydraulique de commande à l'exception du piston annulaire de contrôle qui y pénètre partiellement, il est alors aisé d'adapter un dispositif de remise à zéro sur le dispositif de réglage automatique celui-ci ne voyant pas la pression de freinage. On évite ainsi tous les risques de mauvais montage et toute fuite hydraulique dûs au dispositif de remise à zéro.

D'autres caractéristiques et avantages du frein à disque, objet de la présente invention, apparaîtront à la lecture de la description détaillée de deux modes de réalisation en se référant aux dessins annexés dans lesquels:

- La Figure 1 est une vue de dessus d'un frein à disque réalisé conformément aux enseignements de la présente invention;
- La Figure 2 est une rue partielle agrandie selon la ligne II - II de la Figure 1;
- La Figure 3 est une vue similaire à la Figure 2 du second mode de réalisation de l'invention; et
- La Figure 4 est une coupe partielle selon la ligne IV - IV de la Figure 3.

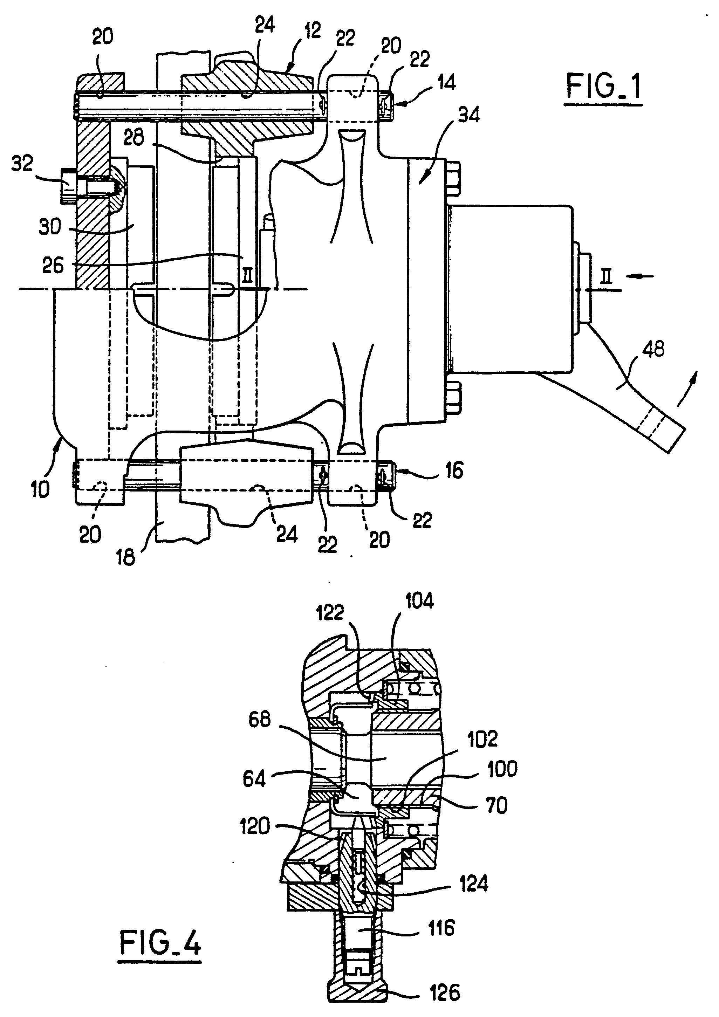

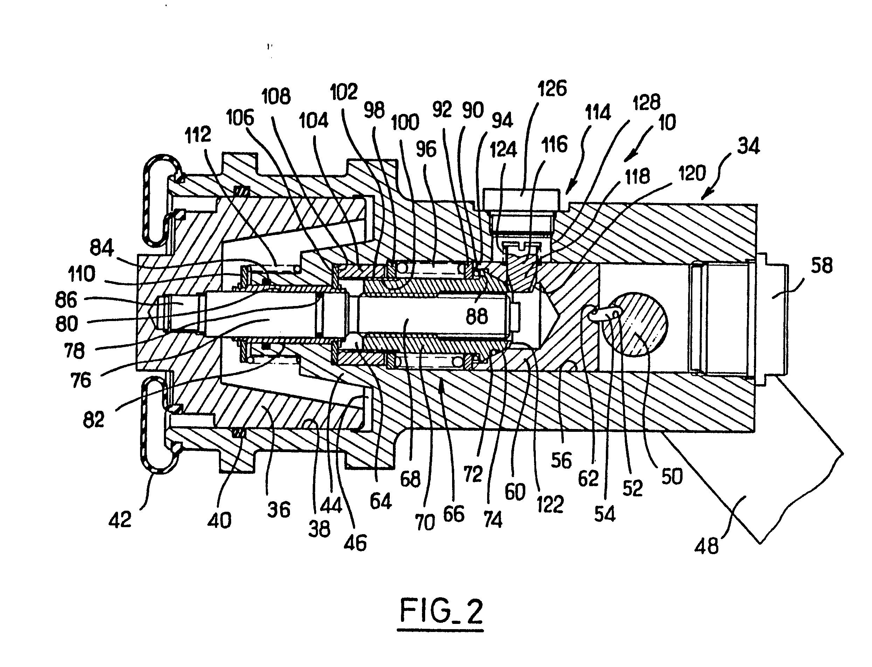

La frein à disque represente sur les Figures 1 et 2 comprend un étrier mobile 10 monté coulissant sur un organe ou support fixe 12 au moyen de deux colonnettes 14 et 16 s'étendent parallèlement à l'axe de rotation du disque tournant 18. Dans le mode de réalisation représenté et comme le montre plus particulièrement la Figure 1, les colonnettes axiales 14 et 16, solidaires de l'étrier 10 au moyen de perçages 20 et de goupilles 22, passent dans des alésages 24 formés dans le support fixe 12 et sont susceptibles de coulisser par rapport à ces alésages 24 et donc par rapport au support fixe 12. Un premier élément de friction 26 est monté dans une ouverture 28 formée dans le support fixe 12, cette ouverture 28 assurant l'ancrage et le coulissement de l'élément de friction 26. Un deuxième élément de friction 30 est fixé sur l'étrier 10 au moyen de deux vis 32 qui assurent l'ancrage de l'élément de friction 30 sur l'étrier 10. En outre, l'étrier 10 est équipé d'un moteur de frein 34 comportent une commande hydraulique et une commande mécanique comme on le verra plus précisément sur la Figure 2. D'une façon conventionnelle, la commande hydraulique est assurée par un piston de commande hydraulique 36 monté coulissant dans un alésage 38 formé dans le moteur de frein 34. L'étanchéité entre le piston 36 et l'alésage 38 est assurée par un joint 40, le piston étant par ailleurs protégé par un capuchon de piston 42. Le piston 36 et une paroi 44 de fond de l'alésage 38 définissent une chambre 46 susceptible d'être reliée à une source de pression (non représentée) comme par exemple le maître-cylindre du vehicule.

La commande mécanique est assurée au moyen d'un levier 48 susceptible d'être relié à un câble ou analogue (non représenté) solidaire d'un axe 50 dans lequel est formée une rainure 52 recevant une biellette allongée 54. L'axe 50 et la biellette allongée 54 sont logés dans un alésage borgne 56 formé dans le moteur de frein 34, la partie ouverte de l'alésage est pourvue d'un obturateur 58 vissé dans le mode de réalisation représenté. L'alésage 56 reçoit également un poussoir 60 dont l'éxtrémité du côté de l'axe 50 présente une rainure 62 qui coopère avec la biellette 54. Le poussoir 60, l'alésage 56 et la paroi 44 définissent une chambre intermédiaire 64 dans laquelle est logé un dispositif de réglage automatique désigné dans son ensemble par la référence 66. Ce dispositif de réglage automatique est analogue à celui décrit dans les documents FR-A-1 317 919 et FR-A-2 402 806 dont le contenu est incorporé par référence à la présente demande.

Le réglage automatique 66 comporte une vis à pas réversible 68 sur laquelle est monté un écrou 70 qui porte sur son extrémité opposée à la paroi 44 une portion en cône 72 susceptible de coopérer avec une portion en cône 74 formée dans le poussoir 60. La vis 68 comporte une portion cylindrique 76 dans laquelle est formée une groupe comportant un joint 78. Ce joint 78 et la partie cylindrique 76 sont susceptibles de coulisser par la rapport à un piston annulaire 80 monté dans un alésage 82 de la paroi 44. Un joint 84 est monté dans l'alésage 82 de manière à rendre étanche le coulissement éventuel du piston 80 par rapport à l'alésage 82. La portion cylindrique 76 se prolonge en direction du piston 36 par une portion filetée 86 permettant de solidariser la vis 68 au piston de commande 36. Au niveau de la porion cônique 72, l'écrou 70 porte un chemin de roulement 88 faisant face à la paroi 44, ce chemin de roulement 88 est susceptible de coopérer avec une butée axiale à bille 90 placée en vis à vis d'un élément annulaire 92 formant un deuxième chemin de roulement, cet élément 92 est susceptible de coulisser dans l'alésage 56 du moteur de frein 34. Cet élément annulaire 92 est appliqué sur un prolongement 94 du poussoir 60 au moyen d'un ressort de rappel 96 lui-même en appui sur une portion annualire 98 solidaire du moteur de frein 34. Lorsque l'élément annulaire 92 est en appui sur le prolongement 94, et que la portion en cône 72 est en appui sur la portion en cône 74, on prévoit un jeu entre la butée à bille 90 et l'élément annulaire 92 de manière à définir le jeu fonctionnel du frein. L'écrou 70 porte sur son extrémité proche de la paroi 44 et sur la surface extérieure de celui-ci une pluralité de rainures 100 dans lesquelles sont montées des sailles 102 formées sur la surface intérieure d'une doulle 104, susceptible de coulisser par rapport à l'écrou 70 mais solidare en rotation avec celui-ci. La douille 104 est guidée par son diamètre extérieure dans une portion de l'alésage 56, permettant à cette douille 104 de coulisser ou de tourner par rapport au moteur de frein 34. Une collerette 106 solidaire du piston de contrôle 80 est placée entre la paroi 44 et une surface frontale 108 de la douille 104. Au repos, lorsque la collerette 106 est en appui sur la paroi 44, il est prévu un jeu axial entre la douille 104 et la portion annulaire solidaire du moteur de frein 98. Le piston de contrôle 80 porte à son extrémité débouchant dans la chambre 46 une portion épanouie ou collerette solidaire dudit piston 80 et sur laquelle vient en appui un ressort de contrôle 112 lui-même prenant appui sur la paroi 44.

Le moteur de frein 34 comporte un dispositif de remis à zéro du réglage automatique désigné dans son ensemble par le référence 114. Ce dispositif 114 comporte une tige de manoeuvre 116 dont une extrémité 118 porte une denture 120 susceptible de coopérer avec une autre denture 122 portée par l'extrémité adjacente de l'écrou 70. La tige de manoevre 116 porte à son autre extrémité une tête de manoeuvre permettant de tourner celle-ci au moyen d'un tourne-vis par exemple. La tête de manoeuvre porte une collerette sur laquelle veint en appui un ressort de rappel 124 qui prend lui-même appui sur le poussoir 60 au niveau d'un orifice 126 formé dans ledit poussoir 60 et qui permet le guidage de la tige de manoeuvre 116. Un bouchon 126 vissé dans le moteur de frein 34 assure l'accès après son démontage à la tige de manoeuvre 116. Comme la tige de manoeuvre 116 est susceptible de se déplacer avec le poussoir 60 on prévoit un jeu axial important entre la tige de manoeuvre 116 et les parois latérales d'une ouverture 128 destinée à l'accès à la tige 116 et au montage du bouchon 126.

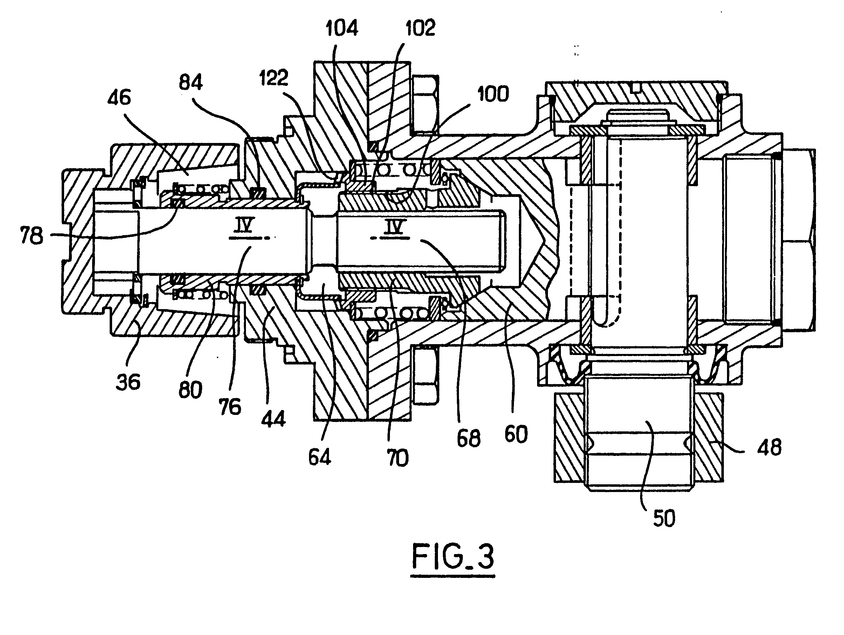

En se reportant aux Figures 3 et 4 sur lesquelles on a représenté un deuxième mode de réalisation, on conservera les mêmes références pour les pièces ayant les mêmes fonctions.

Dans ce mode de réalisation, la seule différene réside dans la localisation du dispositif de remise à zéro qui dans ce mode de réalisation coopère non pas avec l'écrou comme dans le premier mode de réalisation mais avec la douille 104 qui porte elle l'autre denture 122 et permet la rotation de l'écrou 70 au travers des rainures 100 et des saillies 102. Le reste du moteur de frein étant similaire au premier mode de réalisation ne sera pas décrit davantage.

En ce qui concerne le fonctionnement des freins qui viennent d'être décrits on se reportera à la description qui à été faite dans la demande de brevet déposée par la demanderesse et référencée ci-dessus.

On notera cependant que grâce aux joints 78 et 84 la chambre intermédiaire 64 n'est pas soumise à la pression de freinage hydraulique susceptible d'apparaître dans la chambre 46 et que en conséquence le dispositif de remise à zéro 114 n'est jamais soumis à la pression hydraulique de freinage et ne nécessite aucune précaution particulière.

La mise en oeuvre du dispositif de remise à zéro se fait de la manière suivante:

Après avoir déposé le bouchon 126 à l'aide d'un tourne-vis une poussée est exercée sur la tige de manoeuvre 116 à l'encontre du ressort de rappel 124 de manière à ce que la denture 120 de ladite tige de manoeuvre coopère avec la denture 122 portée par l'écrou 70 dans le premier mode de réalisation et par la douille 104 dans le deuxième mode de réalisation. Une rotation du tourne-vis et donc de la tige de manoeuvre entraîne directement dans le premier mode de réalisation et au travers de la douille 104 dans le deuxième mode de réalisation la rotation de l'écrou 70 et donc permet le déplacement relatif entre la vis 68 et l'écrou 70 ce qui permet de procéder à la remise à zéro du réglage automatique et donc de ramener le piston 36 dans sa position initiale.

Comme on le voit de ce qui précède, le dispositif objet de l'invention permet d'incorprer un dispositif de remise à zéro du réglage automatique sans que celui-ci soit soumis à la pression hydraulique de freinage et par conséquent assure la fiabilité du système et empêche tout risque de mauvais montage. Par ailleurs, le ressort de rappel de la tige de manoeuvre assure le désengagement des dentures et donc permet de ne pas perturber le fonctionnement normal du réglage automatique. Il est bien évident qu'on veillera à remettre le bouchon 126 afin de préserver le réglage automatique de toute pollution extérieure.

Il est bien évident que l'invention n'est pas limitée au mode de réalisation décrit, en particulier les deux surfaces côniques peuvent être remplacées par tout autre embrayage sans sortir de cadre de la présente invention, de même le jeu fonctionnel du frein peut être localisé au niveau de la liaison entre vis et piston de commande, la butée à bille 90 étant alors montée sans jeu par rapport à ses chemins de roulement, le prolongement 94 du poussoir devenant de plus inutile.

**Revendications**

1. Frein à disque à réglage automatique du type comportant un étrier (10) monté coulissant sur un support fixe (12) au moyen d'au moins une colonette axiale (14, 16), un moteur de frein (34) agissant directement sur un premier élément de friction (26) et par réaction au travers de l'étrier sur un second élément de friction (30), ledit moteur de frein (34) comportant une commande mécanique (48-50-60) agissant sur un piston de commande hydraulique (36) au travers d'un dispositif de réglage automatique (66), ledit dispositif de réglage (66) étant formé par un système vis-écrou (68-70) à pas réversible susceptible d'être actionné par ledit piston hydraulique (36) au-delà d'une course prédéterminée de ce dernier, ledit dispositif de réglage (66) comportant une douille (104) solidaire en rotation avec ledit écrou (70) et coopérant avec un piston de contrôle annulaire (80) susceptible de se déplacer de façon étanche par rapport à ladite vis (68) et par rapport au moteur de frein (34) ledit piston de contrôle (80) immobilisant ladite douille (104) en rotation et en translation lorsque la pression hydraulique (36) agissant sur le piston de commande hydraulique (36) atteint une valeur prédéterminée, caractérisé en ce que ledit système vis-écrou (68-70) est placé entre ladite commande mécanique (48-50-60) et le piston de contrôle (80) et en ce que le moteur de frein (34) comporte un dispositif de remise manuelle à zéro (114) susceptible d'agir sur l'écrou (70) du système vis-écrou (68-70) pour remettre à zéro le dispositif de réglage automatique (66).

2. Frein à disque selon la revendication 1 caractérisé en ce que ledit piston de contrôle (80) sépare de façon étanche une chambre de commande (46) dans laquelle est admise la pression hydraulique d'une chambre intermédiaire (64) dans laquelle est logé le système vis-écrou (68-70).

3. Frein à disque selon la revendication 2 caractérisé en ce que ladite douille (104) présente à une de ses extrémités au moins une surface frontale (108) susceptible de coopérer axialement avec une portion frontale de collerette (106) portée par ledit piston de contrôle (80).

4. Frein à disque selon la revendication 3 caractérisé en ce que ladite douille (104) est susceptible d'être immobilisée en translation et en rotation par pincement entre ledit piston de contrôle (80) et une portion annulaire (98) solidaire du moteur de frein (34) lorsque ladite pression prédéterminée est atteinte.

5. Frein à disque selon la revendication 4 caractérisé en ce que ledit écrou (70) est maintenu dans une première position au moyen d'un ressort de rappel (96) lorsque la commande mécanique n'est pas actionnée, ledit écrou (70) étant susceptible de se déplacer à l'encontre dudit ressort (96) lors de l'actionnement de la commande mécanique, en ce que ledit écrou (70) comporte une portion cônique (72) susceptible de coopérer avec une autre portion cônique (74) porté par la commande mécanique (60), ledit écrou (70) comportant un chemin de roulement (88) pour une butée axiale à bille (90) montée entre ledit chemin de roulement (88) et un deuxième chemin de roulement formé par un élément annulaire (92) susceptible de coulisser par rapport au moteur de frein (34) à l'encontre dudit ressort de rappel (96) lorsque apparaît un mouvement relatif entre ledit écrou (70) et ledit moteur de frein (34) supérieur à un jeu axial prédéterminé et en ce que ladite vis (68) est solidaire dudit piston de commande (36).

6. Frein à disque selon l'une des revendications précédentes caractérisé en ce que ledit dispositif de remise à zéro (114) comporte une denture (120) portée par une tige de manoeuvre (116) susceptible d'être engagée dans une autre denture (122) portée par ledit écrou (70) à l'encontre d'un ressort de rappel (124), la remise à zéro se faisant par rotation manuelle de la tige de manoeuvre (116) et donc de l'écrou (70).

7. Frein à disque selon l'une des revendications 1 à 5 caractérisé en ce que ledit dispositif de remise à zéro (114) comporte une denture (120) portée par une tige de manoeuvre (116) susceptible d'être engagée dans une autre denture (122) portée par ladite douille (104) à l'encontre d'un ressort de rappel (124) la remise à zéro se faisant par rotation manuelle de la tige de manoeuvre (116) et donc de l'écrou (70) au travers de ladite douille (104).

8. Frein à disque selon l'une des revendications 6 ou 7 caractérisé en ce que la tige de manoeuvre (116) est partiellement logée dans la chambre intermédiaire (64) libre de toute pression hydraulique et en ce que un bouchon (126) monté sur le moteur de frein (34) donne accès, après démontage, à ladite tige de manoeuvre (116).

9. Frein à disque selon la revendication 8 caractérisé en ce que la tige de manoeuvre (116) s'étend perpendiculairement à l'axe du moteur de frein (34).

10. Frein à disque selon l'une des revendications précédentes caractérisé en ce que le piston de contrôle (80,) est sollicité axialement vers le piston hydraulique (36) par un ressort de contrôle (112) prenant appui sur le moteur de frein (34), autorisant ainsi la rotation éventuelle de la douille (104) lorsque ladite pression prédéterminée n'est pas atteinte.

**Patentansprüche**

1. Selbsttätig nachstellbare Scheibenbremse mit einem Bremssattel (10), der auf einem fest angeordneten Bremsträger (12) mittels mindestens eines axialen Bolzens (14, 16) gleitend gelagert ist, einem Bremsmotor (34), der unmittelbar auf einen ersten Bremsbacken (26) und indirekt über den Bremssattel auf einen zweiten Bremsbacken (30) einwirkt, wobei der Bremsmotor (34) eine mechanische Betätigungseinrichtung (48-50-60) aufweist, die auf einen hydraulischen Betätigungskolben (36) über eine selbsttätige Nachstellvorrichtung (66) einwirkt, wobei die Nachstellvorrichtung (66) von einem umkehrbaren Spindel-Muttermechanismus (68-70) gebildet wird, der von dem hydraulischen Kolben (36) über eine vorgegebene Bewegungsstrecke desselben hinaus betätigt wird, wobei die Nachstellvorrichtung (66) eine Hülse (104) aufweist, die mit der Mutter (70) drehfest verbunden ist, und mit einem ringförmigen Steuerkolben (80) zusammenwirkt, der in abgedichteter Weise bezüglich der Spindel (68) und bezüglich des Bremsmotors (34) verschiebbar ist, wobei der Steuerkolben (80) die Hülse (104) in Dreh- und Translationsrichtung festlegt, wenn der auf den hydraulischen Betätigungskolben wirkende hydraulische Druck einen vorgegebenen Wert erreicht, dadurch gekennzeichnet, daß der Spindel-Mutter-Mechanismus (68-70) zwischen der mechanischen Betätigungseinrichtung (48-50-60) und dem Steuerkolben (80) angeordnet ist und daß der Bremsmotor (34) eine manuelle Nullrückstellungsvorrichtung (114) aufweist, die auf die Mutter (70) des Spindel-Mutter-Mechanismus (68-70) einwirkt, um die selbsttätige Nachstellvorrichtung (66) auf Null zurückzustellen.

2. Scheibenbremse nach Anspruch 1, dadurch gekennzeichnet, daß der Steuerkolben (80) in abgedichteter Weise eine Betätigungskammer (46), der der hydraulische Druck zugeführt wird, von einer Zwischenkanmmer (64) trennt, in der der Spindel-Mutter-Mechanismus (68-70) untergebracht ist.

3. Scheibenbremse nach Anspruch 2, dadurch gekennzeichnet, daß die Hülse (104) an einer ihrer Enden mindestens eine Stirnfläche (108) aufweist, die axial mit einem frontalen Abschnitt einer Ringscheibe (106) zusammenwirkt, die von dem Steuerkolben (80) getragen wird.

4. Scheibenbremse nach Anspruch 3, dadurch gekennzeichnet, daß die Hülse (104) so ausgebildet ist, daß sie in Translations- und Drehrichtung durch Einklemmen zwischen dem Steuerkolben (80) und einem mit dem Bremsmotor (34) fest verbundenen ringförmigen Abschnitt (98) festgelegt wird, wenn der vorgegebene Druck erreicht ist.

5. Scheibenbremse nach Anspruch 4, dadurch gekennzeichnet, daß die Mutter (70) mit Hilfe einer Rückholfeder (96) in einer ersten Stellung gehalten wird, wenn die mechanische Betätigungseinrichtung nicht aktiviert wird, wobei die Mutter (70) entgegen der Feder (96) bei der Aktivierung der mechanischen Betätigungseinrichtung verschiebbar ist, daß die Mutter (70) einen konischen Abschnitt (72) aufweist, der mit einem von der mechanischen Betätigungseinrichtung (60) getragenen anderen konischen Abschnitt (74) zusammenwirkt, daß die Mutter (70) eine Lauffläche (88) für ein Kugelaxiallager (90) aufweist, das zwischen dieser Lauffläche (88) und einer zweiten Lauffläche gelagert ist, die von einem ringförmigen Bauteil (92) gebildet wird, welches bezüglich des Bremsmotors (34) entgegen der Rückholfeder (96) gleitbar ist, wenn zwischen der Mutter (70) und dem Bremsmotor (34) eine Relativbewegung erfolgt, die größer ist als ein vorgegebenes axiales Spiel, und daß die Spindel (68) mit dem Betätigungskolben (36) fest verbunden ist.

6. Scheibenbremse nach einem der vorhergehenden Ansprüche, dadurch gekennzeichnet, daß die Nullrückstellvorrichtung (114) eine von einer Bedienungsstange (116) getragene Verzahnung (120) aufweist, die entgegen einer Rückholfeder (124) mit einer von der Mutter (70) getragenen anderen Verzahnung (122) in Eingriff bringbar ist, wobei die Nullrückstellung durch manuelles Drehen der Bedienungsstange (116) und somit der Mutter (70) erfolgt.

7. Scheibenbremse nach einem der Ansprüche 1-5, dadurch gekennzeichnet, daß die Nullrückstellvorrichtung (114) eine von einer Bedienungsstange (116) getragene Verzahnung (120) aufweist, die entgegen einer Rückholfeder (124) mit einer von der Hülse (104) getragenen anderen Verzahnung (122) in Eingriff bringbar ist, wobei die Nullrückstellung durch manuelles Drehen der Bedienungsstange (116) und somit der Mutter (70) über die Hülse (104) erfolgt.

8. Scheibenbremse nach Anspruch 6 oder 7, dadurch gekennzeichnet, daß die Bedienungsstange (116) teilweise in der Zwischenkammer (64) untergebracht ist, die frei von hydraulischem Druck ist, und daß ein Stopfen (126), der an dem Bremsmotor (34) angebracht ist, nach seiner Entfernung einen Zugang zu der Bedienungsstange (116) freigibt.

9. Scheibenbremse nach Anspruch 8, dadurch gekennzeichnet, daß die Bedienungsstange (116) senkrecht zur Achse des Bremsmotors (34) verläuft.

10. Scheibenbremse nach einem der vorhergehenden Ansprüche, dadurch gekennzeichnet, daß der Steuerkolben (80) axial in Richtung auf den hydraulischen Kolben (36) von einer am Bremsmotor (34) abgestützten Steuerfeder (112) vorgespannt wird, was somit die ggf erfolgende Drehung der Hülse (104) erlaubt, wenn der vorgegebene Druck nicht erreicht ist.

## Claims

1. Disc-brake uith automatic adjustment of the type comprising a caliper (10) slideably mounted on a fixed support (12) by means of at least one axial pillar (14, 16), a brake actuator (34) acting directly upon a first friction component (26), and by reaction through the caliper, upon a second friction component (30), the said brake actuator (34) comprising a mechanical control (48-50-60) acting upon a hydraulic control piston (36) through a device for automatic adjustment (66), the said adjustment device (66) being formed by a screw and nut system (68-70) having a pitch which allows reverse action, capable of being actuated by the said hydraulic piston (36) beyond a predetermined travel of the latter, the said adjustment device (66) comprising a sleeve (104) which is firmly fixed in rotation to the said nut (70) and co-operating with an annular control piston (80) capable of moving so as to be sealed relative to the said screw (68) and relative to the brake actuator (34), the said control piston (80) immobilizing the said sleeve (104) in rotation and in translation when the hydraulic pressure acting upon the hydraulic control piston (36) reaches a predetermined value, characterized in that the said screw and nut system (68-70) is positioned between the said mechanical control (48-50-60) and the control piston (80) and in that the brake actuator (34) comprises a device for manually resetting to zero (114) which is capable of acting upon the nut (70) of the screw and nut system (68-70) in order to reset the automatic adjustment device (66) to zero.

2. Disc-brake according to Claim 1, characterized in that the said cotrol piston (80) separates in a sealed manner a control chamber (46) into which the hydraulic pressurre is admitted from an intermediate chamber (64) in which the screw and nut system (68-70) is housed.

3. Disc-brake according to Claim 2, characterized in that the said sleeve (104) has at least one front surface (108) at one of its ends, capable of co-operating axially with a front collar portion (106) carried by the said control piston (80).

4. Disc-brake according to claim 3, characterized in that the said sleeve (104) is capable of being immobilized in translation and in rotation by being trapped between the said control piston (80) and an annular portion (98) firmly fixed to the brake actuator (34), when the said predetermined pressure is reached.

5. Disc-brake according to claim 4, characterized in that the said nut (70) is held in a first position by means of a return spring (96) when the mechanical control is not being actuated, the said nut (70) being capable of moving against the said spring (96) during actuation of the mechanical control, in that the said nut (70) comprises a conical portion (72) capable of co-operating with another conical portion (74) carried by the mechanical control (60), the said nut (70), comprising a rolling track (88) for an axial thrust ball bearing (90) mounted between the said rolling track (88) and a second rolling track formed by an annular component (92) which is capable of sliding relative to the brake actuator (34) against the said return spring (96) when a relative movement between the said nut (70) and the said brake actuator (34) appears which is greater than a predetermined axial clearance, and in that the said screw (68) is firmly fixed to the said control piston (36).

6. Disc-brake according to one of the preceding claims, characterized in that the said device for resetting to zero (114) comprises a set of teeth (120) carried by an operating rod (116) which are capable of being engaged with another set of teeth (122) carried by the said nut (70) against a return spring (124), resetting to zero being carried out by manual rotation of the operating rod (116) and thus of the nut (70).

7. Disc-brake according to one of claims 1 to 5, characterized in that the said device for resetting to zero (144) comprises a set of teeth (120) carried by an operating rod (116) which are capable of being engaged with another set of teeth (122) carried by the said sleeve (104) against a return spring (124), resetting to zero being carried out by manual rotation of the operating rod (116) and thus of the nut (70) through the said sleeve (104).

8. Disc-brake according to either of claims 6 or 7, characterized in that the operating rod (116) is partially housed in the intermediate chamber (64) free of any hydraulic pressure, and in that a plug (126) mounted on the brake actuator (34) gives access, after removal, to the said operating rod (116).

9. Disc-brake according to claim 8, characterized in that the operating rod (116) extends perpendicularly to the axis of the brake actuator (34).

10. Disc-brake according to one of the preceding claims, characterized in that the control piston (80) is pushed axially towards the hydraulic piston (36) by a control spring (112) bearing upon the brake actuator (34) thus allowing possible rotation of the sleeve (104) when the said predetermined pressure has not been reached.

FIG_1

FIG_4

FIG_2

FIG.3